# EUROPÄISCHE PATENTSCHRIFT

(11) **EP 3 384 753 B1**
(45) Veröffentlichungstag und Bekanntmachung des Hinweises auf die Patenterteilung: **16.10.2019**
(21) Anmeldenummer: 18162228.3
(22) Anmeldetag: 16.03.2018
(51) Int. Cl.: A01D 34/43

(54) **HÄCKSEL-, SAMMEL- UND TRANSPORTMASCHINE FÜR HÄCKSELGUT**
CHOPPING, COLLECTING AND TRANSPORTING APPARATUS FOR CHOPPED STRAW
MACHINE DE HACHAGE, DE COLLECTE ET DE TRANSPORT POUR PRODUIT À HACHER

(30) Priorität: 04.04.2017 IT 201700036873
(43) Veröffentlichungstag der Anmeldung: 10.10.2018
(73) Patentinhaber: Seppi M. spa-AG, 39052 Caldaro (IT)
(72) Erfinder: SEPPI, Lorenz, 39052 Caldaro (IT)
(74) Vertreter: Ausserer, Anton

(56) Entgegenhaltungen:
- WO-A1-2013/075934
- DE-B- 1 251 570
- US-A- 2 924 054

## Beschreibung

Die vorliegende Erfindung bezieht sich auf eine Häcksel-, Sammel- und Transportmaschine für Häckselgut nach dem Oberbegriff des Anspruchs 1.

Maschinen zum Häckseln und Transport von Material, wie Wurzeln, Holz, Biomasse im Allgemeinen und auch von Müll sind allgemein bekannt. Ihre Aufgabe besteht im Sammeln und Häckseln des Materials und dann im Abladen in einem Sammelcontainer oder Sammelfahrzeug oder auf dem Boden.

Aus der US 2,836,023 ist eine Häcksel-, Sammel- und Transportmaschine für Häckselgut bekannt, wobei diese einen Werkzeughalterrotor mit zu dem zu behandelnden Boden im Wesentlichen paralleler und zur Fahrtrichtung senkrechter Achse umfasst. Die Förderschnecke fördert das Material in Richtung eines zum Rotor wesentlichen senkrechten GebläseGebläselaufrades, das das Häckselgut auswirft.

Die größten Probleme bestehen bei der Bildung eines kontinuierlichen Materialstromes zu dessen gleichförmigen Bearbeitung. Insbesondere könnten Probleme beim Transport des Materials in Richtung des GebläseGebläselaufrades mittels der Förderschnecke entstehen, die das vom Rotor erhaltene Material anhält und es quer zum Rotor zur Zuführungsöffnung eines zweiten Rotors fördert. Das GebläseGebläselaufrad ist überdies nicht immer im Stande, das Material mangels der nötigen Kraft vorzuschieben.

Die US 2 924 054 beschreibt eine Maschine zum Häckseln von Material durch einen Werkzeughalterrotor und den Auswurf mittels eines GebläseGebläselaufrades. Der Werkzeughalterrotor wird durch eine Welle angetrieben, die seitlich zum GebläseGebläselaufrad angeordnet ist, wobei dies erhebliche Probleme schafft, da die Breite des GebläseGebläselaufrades und daher die Kraft des Auswurfstromes begrenzt ist. Der Antrieb ist überdies exzentrisch. Diese Exzentrizität beträgt eine Verschiebung des Schwerpunktes mit sich daraus ergebenden größerer Instabilität der Maschine. Überdies werden zwei Antriebswellen benötigt, was weitere Kosten verursacht.

Die Aufgabe der vorliegenden Erfindung liegt darin, eine Maschine zu schaffen, die das Material sammelt und häckselt, indem ein kontinuierlicher Materialstrom gebildet und auf dieser Weise ein gleichförmiges Häckseln des gesammelten Materials sichergestellt wird.

Diese Aufgabe wird durch eine Häcksel-, Sammel- und Transportmaschine für Häckselgut gemäß dem kennzeichnenden Teil des Anspruchs 1 gelöst.

Die Häcksel-, Sammel- und Transportmaschine für Häckselgut umfasst einen Rahmen, der dazu bestimmt ist, von einem Fahrmittel aufgenommen zu werden, einen Werkzeughalterrotor, der vom Rahmen mit im Wesentlichen zu dem zu behandelnden Boden parallelen und zur Fahrtrichtung des Fahrmittels senkrechten Achse aufgenommen ist, einen Antrieb zur Bewegung einer mit dem Werkzeughalterrotor antriebsmäßig verbundenen Welle und ein GebläseGebläselaufrad, das im Wesentlichen senkrecht zum Werkzeughalterrotor angeordnet ist. Gemäß der Erfindung weist das GebläseGebläselaufrad Schaufeln mit Schneidelementen und ein Gehäuse, in dem der Werkzeughalterrotor angeordnet ist, und ein Gehäuse auf, in dem das GebläseGebläselaufrad angeordnet ist, wobei der Werkzeughalterrotor und das GebläseGebläselaufrad durch einen Kanal unmittelbar kommunizieren, der sich in einer zum Boden im Wesentlichen parallelen Richtung erstreckt und der Kanal zulaufende Seitenwandungen aufweist und die Eingangsöffnung des Kanals eine größere Abmessung aufweist als die Ausgangsöffnung des Kanals.

Die den Werkzeughalterrotor antreibende Welle führt durch das Gebläselaufrad hindurch, vorteilhafterweise ist es dieselbe Welle die auch das Gebläselaufrad antreibt. Vorteilhafterweise ist zwischen Antriebswelle und Werkzeughalterrotor ein Schaltgetriebe angeordnet.

Durch die Konvergenz der Seitenwandungen wird eine Zunahme des Druckes des Luft-Häckselmaterialflusses erzielt. Auf diese Art und Weise gelingt es dem Gebläselaufrad leichter, das Material ein zweites Mal zu häckseln und auszuwerfen.

Auf vorteilhafterweise sind vor dem Werkzeughalterrotor zwei Rotoren für das Erfassen und das erste Häckseln des Materials vom Boden angeordnet. Somit kann der Werkzeughalterrotor kontinuierlich gespeist werden und sich mit konstanter Geschwindigkeit drehen, indem ein kontinuierlicher Material- und Luftstrom sichergestellt wird, ohne die Gefahr durch zugeführtes zu voluminöses Material verstopft zu werden. Diese Ausbildung erlaubt vorteilhaftere Schaffung und Fluss von Material.

In einer bevorzugten Ausführungsform, wird das Material vom Werkzeughalterrotor zum Gebläselaufrad durch einen Kanal von oben nach unten mit Eingang des Materials unterhalb der Drehmitte des Gebläselaufrades zugeführt.

Die erfindungsgemäße Maschine kann durch ein Fahrzeug gezogen werden, kann daher an der Hecke in Fortbewegungsrichtung oder vorne am Arbeitsfahrzeug angebracht sein.

Nachfolgend wird nicht begrenzend eine Ausführungsform aufgrund eines Traktors beschrieben, der die erfindungsgemäße Maschine schiebt. Alle Merkmale der Erfindung sind auch an einem Fahrzeug, auch Raupenfahrzeug anwendbar, wo die Maschine vor dem Fahrzeug in Fortbewegungsrichtung angebracht ist.

Die Häcksel-, Sammel- und Transportmaschine für Häckselgut weist bevorzugter Weise eine Sammeleinrichtung auf, die mittels zweier sich gegensinnig drehenden Rotoren ausgeführt sein kann, die das zu häckselnde Material sammeln und mit Werkzeugen versehen sind, die die Größe des gesammelten Materials verkleinern. Das gesammelte Material wird dann in Richtung des Werkzeughalterrotors zugeführt. Bevorzugter Weise dreht sich der Rotor im Uhrzeigersinn wenn die Maschine am Heck des Fahrzeuges angebracht ist und im Gegenuhrzeigersinn wenn die Maschine an der Frontseite des Fahrzeuges angebracht ist.

Das Material wird gehäckselt und dem Kanal zugeführt. Der Kanal weist zulaufende bzw. konvergente Wandungen und eine Eingangsöffnung mit einer Oberfläche auf, die größer ist als jene der Ausgangsöffnung; überdies ist vorteilhafterweise der Kanal nach unten geneigt. In einer bevorzugten Ausführungsform ergibt sich, dass die Position des Ausganges des Kanals in Richtung des Gebläselaufrades im Wesentlichen senkrecht zum Werkzeughalterrotor unterhalb der Drehmitte des Gebläselaufrades liegt. Der obere Kanalrand liegt von 15% bis 21% des Durchmessers des Gebläselaufrades, bevorzugter Weise des Außendurchmessers des Gebläselaufrades, unterhalb der Drehmitte und der untere Rand des Kanals von 30% bis 40% des Durchmessers des Gebläselaufrades, bevorzugter Weise des Außendurchmessers des Gebläselaufrades, unterhalb der Drehmitte desselben.

Die untere Wandung und die obere Wandung bilden einen Winkel zwischen 25° und 50°. Auf diese Weise wird das Gebläselaufrad vorteilhafterweise gespeist in dem ein weiteres Häckseln des Materials durch die Schaufeln des Gebläselaufrades sichergestellt wird, die Schneidbereiche und/oder Schneidelemente aufweisen.

Bevorzugter Weise weist der Kanal in seinem Inneren im Wesentlichen mittig einen Keil auf, dessen Spitze in Richtung des Werkzeughalterrotors gerichtet ist. Dieser Keil besitzt die Verstärkungsaufgabe in der Struktur, um eine höhere Standfestigkeit zu gewährleisten.

Nach der Zuführung des Materials zum Gebläselaufrad, wird das Material weiter gehäckselt und über einen Auswurfkanal ausgeworfen. Dieser Auswurfkanal ist bevorzugter Weise schwenkbar und dazu geeignet, einen Verbraucher bevorzugter Weise einen am Fahrzeug angeordneten Behälter zu beschicken.

Weitere Merkmale und Einzelheiten der Erfindung ergeben sich aus den Patentansprüchen und aus der folgenden Beschreibung einer bevorzugten, nicht begrenzenden, in den beigefügten Zeichnungen dargestellten Ausführungsform, in welcher zeigen:
- Figur 1: eine Seitenansicht mit einem eine erfindungsgemäße Maschine ziehendes Fahrzeug,
- Figur 2: einen Längsschnitt aus Figur 1;

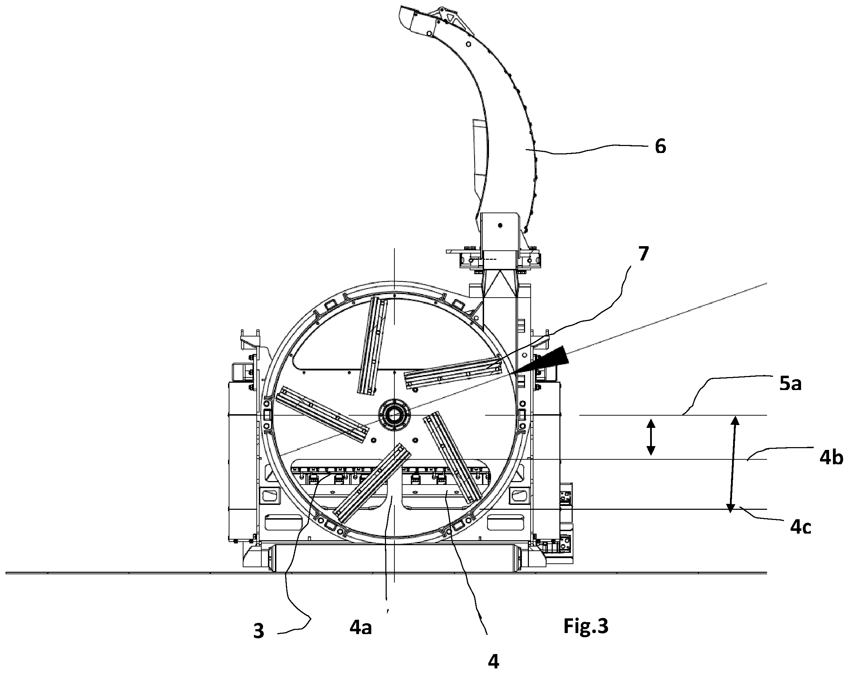

- Figur 3: eine Stirnansicht eines Querschnitts des Gebläselaufrades der erfindungsgemäßen Maschine;
- Figur 4: eine Ansicht von oben eines Schnittes des Werkzeugträgerrotors und des Kanals der erfindungsgemäße Maschine,

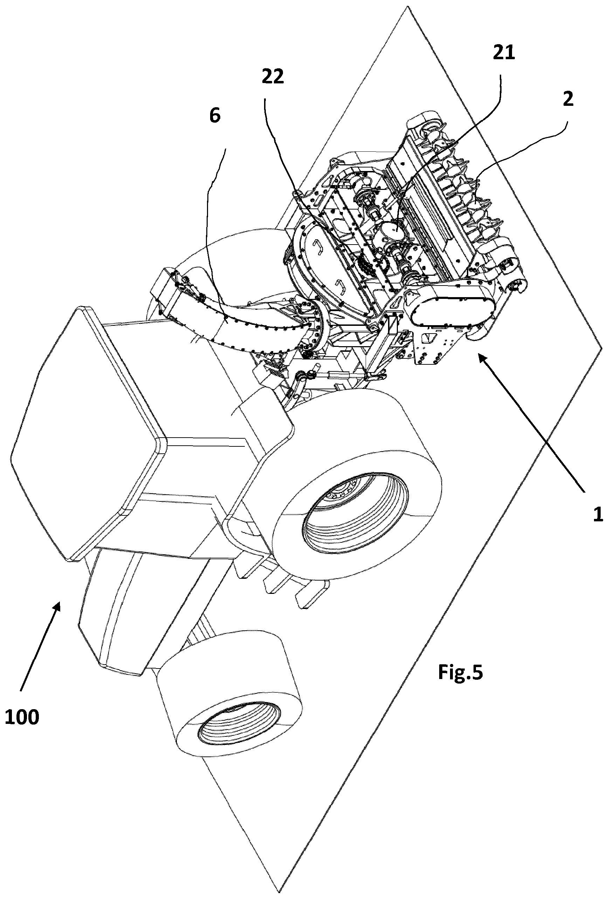

- Figur 5: ein Schaubild eines Fahrzeuges und einer erfindungsgemäßen Maschine, und

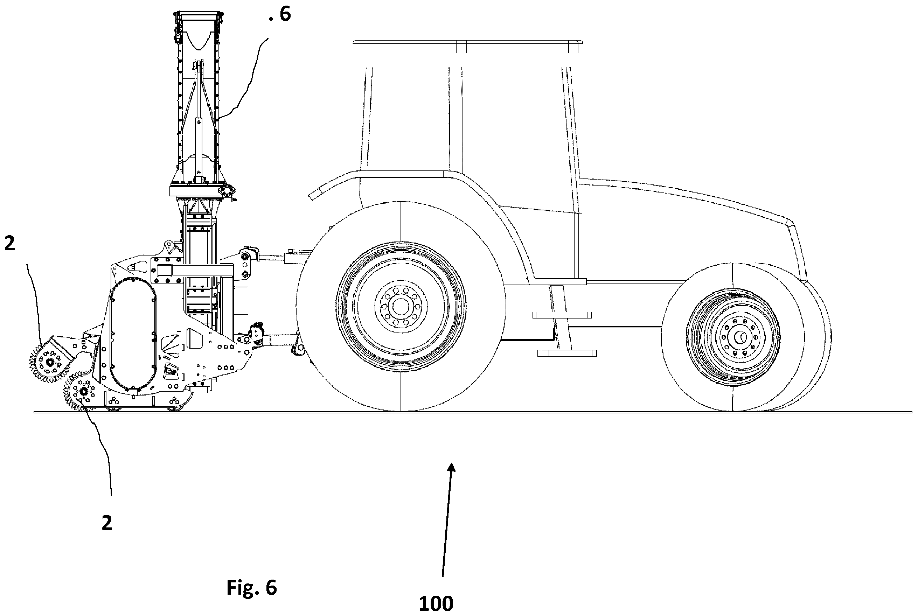

- Figur 6: eine Seitenansicht eines Fahrzeuges und einer erfindungsgemäßen Maschine.

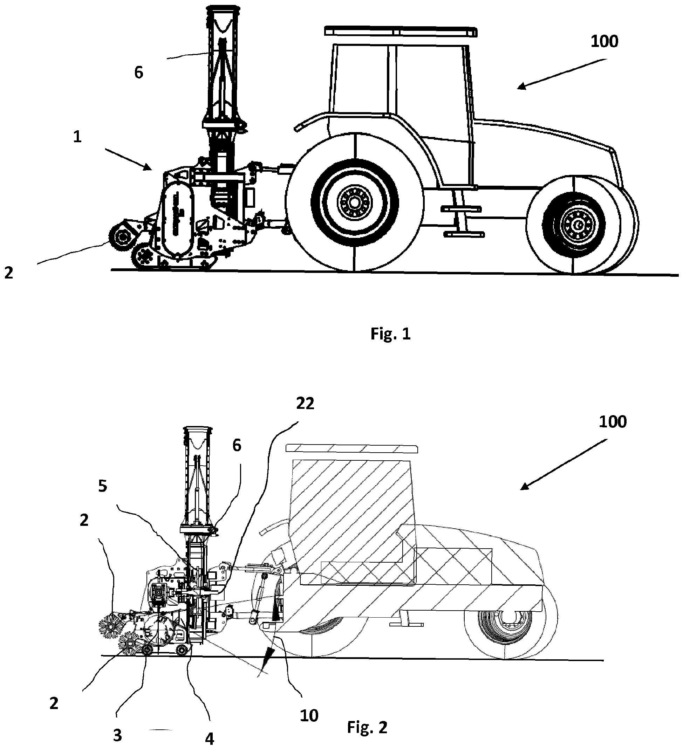

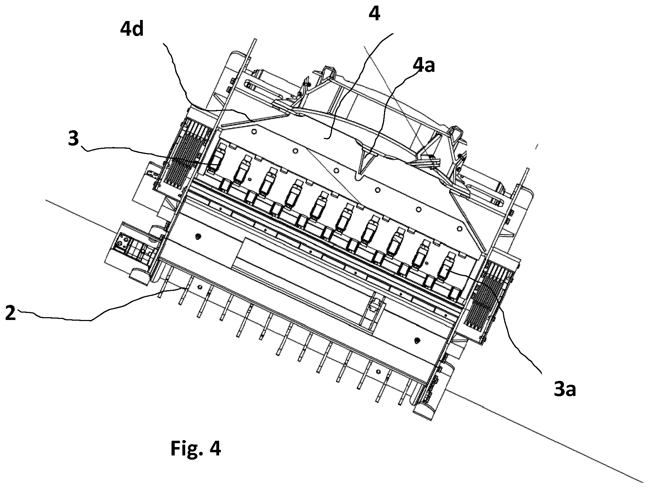

In Figur 1 ist mit der Bezugsziffer 100 insbesondere ein Fahrzeug angegeben. Das Fahrzeug zieht und/oder schwenkt und steuert die erfindungsgemäße Maschine 1. Die erfindungsgemäße Maschine sammelt mittels von zwei sich gegensinnig drehenden Rotoren 2 das zu häckselnde Material. Diese Rotoren 2 erfüllen auch die Aufgabe die Größe des zu häckselnden Materials zu verkleinern. Die Rotoren 2 führen das zur häckselnde Material einem Werkzeughalterrotor 3 zu, der sich im Wesentlichen parallel zum Boden dreht und durch dem Maschinenrahmen drehbar aufgenommen ist. Der Werkzeughalterrotor 3 ist mit einer Reihe von Werkzeugen 3a, Figur 4, versehen. Diese Werkzeuge 3a können verschwenkt werden. Außer das Material zu häckseln, erfüllen die Werkzeuge auch die Aufgabe einen kontinuierlichen Luft- Materiafluss zu erzeugen. Der Werkzeughalterrotor 3 dreht sich vorteilhafterweise im Uhrzeigersinn wenn die Maschine am Heck des Fahrzeuges 100 angebracht ist und im Gegenuhrzeigersinn, wenn sie an der Frontseite des Fahrzeuges 100 angebracht ist. Der Werkzeughalterrotor 3 häckselt das Material und erzeugt einen Luft- Materialfluss, der dem Kanal 4 zugeführt wird. Vorteilhafterweise erfolgt die Zuführung auf dem oberen Teil, der dem Eingang des im Rotor zu häckselnden Materials abgewandt ist.

Der Werkzeughalterrotor 3 wird durch eine Welle und einen Antrieb betätigt. Sowohl die Rotoren 2 als auch der Rotor 3 und das Gebläselaufrad 5 können mittels desselben Antriebs/Motors angetrieben werden und die den Rotor antreibende Welle 22 ist durch und das Gebläselaufrad geführt.

Vorteilhafterweise treibt eine einzige Welle 22 sowohl den Rotor 3 als auch das Gebläselaufrad 5 an, insbesondere ist zwischen der Welle 22 und dem Rotor 3 eine Kupplung 21 angeordnet. Somit kann die Geschwindigkeit des Werkzeughalterrotors 3 eingestellt werden.

Der Kanal 4 weist zulaufende bzw. konvergente Seitenwandungen auf. Die obere und untere Wandung des Kanals 5 bilden zwischen sich bevorzugter Weise einen Winkel 10 zwischen 25° und 50°. Vorteilhafterweise befindet sich in der Mitte des Kanals ein Keil 4a mit Spitze in Richtung des Werkzeughalterrotors 3. Dieser Keil erlaubt die strukturelle Festigkeit des Kanals und daher der gesamten Struktur der Maschine gemäß der Erfindung zu erhöhen.

Aus einer bevorzugten Ausführungsform geht hervor, dass die Position des Ausgangs des Kanals 4 zum Gebläselaufrad 5 im Wesentlichen senkrecht gegenüber dem Werkzeughalterrotor 3 unterhalb der Drehmitte 5a des Gebläselaufrades gelegen ist, der obere Kanalrand 4 von 15% bis 21% des Gebläselaufrades, bevorzugter Weise der Außendurchmesser des Gebläselaufrades 5, unterhalb der Drehmitte 5a und der untere Kanalrand 4c von 30% bis 40% des Durchmessers des Gebläselaufrades, bevorzugter Weise der Außendurchmesser des Gebläselaufrades5, unterhalb der Drehmitte 5a.

Der Kanal 4 weist eine Oberfläche der Eingangsöffnung auf, die größer ist als die Oberfläche der Ausgangsöffnung.

Somit tritt der Luft- und Materialfluss in das Gehäuse ein, in dem das Gebläselaufrad 5 angeordnet ist, indem ein Fluss mit kinetischer Energie sichergestellt wird, wobei die Aufgabe des Gebläselaufrades 5 erleichtert wird, das Material mittels der Schneidelemente und/oder - Schneidbereiche aufweisenden Schaufeln 7 auszuwerfen und zu häckseln. Der Auswurf erfolgt vorteilhafterweise durch den Auswurfkanal 6. Dieser Auswurfkanal 6 ist vorteilhafterweise sowohl in der Höhe als auch in seiner Richtung schwenkbar und einstellbar. Vorteilhafterweise speist der Auswurfkanal einen durch einen Behälter gebildeten Verbraucher.

Es ist schließlich klar, dass an der bis jetzt beschriebenen Sammel- und/oder Häckselmaschine für den Fachmann naheliegende Zusätze, Abänderungen oder Varianten vorgenommen werden können ohne deshalb den durch die beigefügten Patentansprüche gebildeten Schutzbereich zu verlassen.

Aufstellung der Bezugsziffern Absatz
- 1.: erfindungsgemäße Maschine
- 2.: Sammelrotoren
- 3.: Werkzeughalterrotor
- 3a.: Werkzeuge
- 4.: Kanal
- 4a.: Keil
- 4b.: Oberer Kanalrand
- 4c.: Unterer Kanalrand
- 4d.: Seitenwandungen des Kanals
- 5.: Gebläselaufrad
- 5a.: Drehmitte Gebläselaufrad
- 6.: Auswurfkanal
- 7.: Schaufeln des Gebläselaufrades
- 10.: Winkel gebildet zwischen der oberen Oberfläche des Kanals und der unteren Oberfläche des Kanals
- 21.: Schaltgetriebe
- 22.: Antriebswelle
- 100.: Fahrzeug

## Patentansprüche

1. Häcksel-, Sammel- und Transportmaschine für Häckselgut (1), umfassend einen Rahmen, der dazu bestimmt ist, von einem Fahrmittel aufgenommen zu werden, einen Werkzeughalterrotor (3), der vom Rahmen mit im Wesentlichen zu dem zu behandelnden Boden parallelen und zur Fahrtrichtung des Fahrmittels (100) senkrechten Achse aufgenommen ist, einen Antrieb zur Bewegung einer mit dem Werkzeughalterrotor (3) antriebsmäßig verbundenen Welle und ein Gebläselaufrad (5), das im Wesentlichen senkrecht zum Werkzeughalterrotor (3) angeordnet ist, wobei zwischen dem Werkzeughalterrotor (3) und dem Gebläselaufrad (5) ein Kanal (4) angeordnet ist, der eine Oberfläche der Eingangsöffnung aufweist, die größer ist als die Oberfläche der Ausgangsöffnung, **dadurch gekennzeichnet, dass** der obere Rand (4b) des Kanals (4) von 15% bis 21% des Außendurchmessers des Gebläselaufrades, unterhalb der Drehmitte (5a)und der untere Rand (4c) des Kanals (4) von 30% bis 40% des Außendurchmessers des Gebläselaufrades (5), unterhalb der Drehmitte (5a) liegt und das der Werkzeughalterrotor durch einen Antriebswelle angetrieben wird, die durch das Gebläselaufrad (5) hindurchgeführt ist und das Gebläselaufrad (5) und der Werkzeughalterrotor (3) durch dieselbe Welle (22) angetrieben werden.

2. Häcksel-, Sammel- und Transportmaschine für Häckselgut (1), nach Anspruch 1, **dadurch gekennzeichnet, dass** der Werkzeughalterrotor (3) durch zwei gegensinnig umlaufende Rotoren (2) gespeist wird.

3. Häcksel-, Sammel- und Transportmaschine für Häckselgut (1), nach Anspruch 1, **dadurch gekennzeichnet, dass** zwischen der Welle (22) und dem Werkzeughalterrotor ein Schaltgetriebe (21) angeordnet ist.

4. Häcksel-, Sammel- und Transportmaschine für Häckselgut (1), nach einem der vorstehenden Ansprüche, **dadurch gekennzeichnet, dass** die oberen und die untere Wandung des Kanals (5) einen Winkel (10) zwischen 25°und 50°bilden.

5. Häcksel-, Sammel- und Transportmaschine für Häckselgut (1), nach einem der vorstehenden Ansprüche, **dadurch gekennzeichnet, dass** die Schaufeln (7) des Gebläselaufrades (5) Schneidelemente und/oder - Schneidbereiche aufweisen.

6. Häcksel-, Sammel- und Transportmaschine für Häckselgut (1), nach einem der vorstehenden Ansprüche, **dadurch gekennzeichnet, dass** die am Werkzeughalterrotor angeordneten Werkzeuge (3a) schwenkbar sind.

7. Häcksel-, Sammel- und Transportmaschine für Häckselgut (1), nach einem der vorstehenden Ansprüche, **dadurch gekennzeichnet, dass** sich der Werkzeughalterrotor (3a) dreht im Uhrzeigersinn wenn die Maschine (1) am Heck des Fahrmittels (100) angebracht ist und im Gegenuhrzeigersinn, wenn die Maschine (1) an der Frontseite des Fahrzeuges (100) angebracht ist.

8. Häcksel-, Sammel- und Transportmaschine für Häckselgut (1), nach einem der vorstehenden Ansprüche, **dadurch gekennzeichnet, dass** die Seitenwandungen (4d) des Kanals (4) in Richtung des Gebläselaufrades(5) zusammenlaufen.

## Claims

1. A machine for chopping, harvesting and transporting chopped material (1), comprising a frame designed to be carried by a vehicle, a tool-holding rotor (3) which is rotatably received by the frame with its axis substantially parallel to a soil be teated and perpendicular to the direction of travel of the vehicle (100), an actuator for driving a shaft that is kinematically connected to the tool-holding rotor (3) and a blower wheel (5) substantially orthogonal to the tool-holding rotor (3), wherein a channel (4) is provided between the tool-holding rotor (3) and the blower wheel (5), having the surface of its inlet opening greater than the surface of its outlet opening **characterized in that** the upper edge (4b) of the channel (4) is placed at 15% to 21% of the outside diameter of the blower wheel (5) below the center of rotation (5a) and the lower edge (4c) of the channel (4) is placed at 30% to 40% of the outside diameter of the blower wheel (5) below the center of rotation (5a) and **in that** the tool-holding rotor is driven by a drive shaft that extends through the blower wheel (5) and **in that** the blower wheel (5) and the tool-holding rotor (3) are driven by means of the same shaft (22).

2. A machine for chopping, harvesting and transporting chopped material (1) as claimed in claim 1, **characterized in that** the tool-holding rotor (3) is driven via two counter-rotating rotors (2).

3. A machine for chopping, harvesting and transporting chopped material (1) as claimed in claim 1, **characterized in that** a gearbox (21) is placed between the shaft (22) and the tool-holding rotor.

4. A machine for chopping, harvesting and transporting chopped material (1) as claimed in any of the preceding claims, **characterized in that** the top and bottom walls of the channel (5) form an angle (10) that ranges from 25° to 50°.

5. A machine for chopping, harvesting and transporting chopped material (1) as claimed in any of the preceding claims, **characterized in that** the blades (7) of the blower wheel (5) have sharp elements and/or sharp areas.

6. A machine for chopping, harvesting and transporting chopped material (1) as claimed in any of the preceding claims, **characterized in that** the tools (3a) on the tool-holding rotor are tiltably mounted.

7. A machine for chopping, harvesting and transporting chopped material (1) as claimed in any of the preceding claims, **characterized in that** the tool-holding rotor (3a) rotates clockwise if the machine (1) is placed at the rear of the vehicle (100) and counterclockwise if the machine (1) is placed in front of the vehicle (100).

8. A machine for chopping, harvesting and transporting chopped material (1) as claimed in any of the preceding claims, **characterized in that** the side walls (4d) of the channel (4) converge toward the blower wheel (5).

## Revendications

1. Machine pour hacher, récolter et transporter le matériau haché (1), comprenant un châssis conçu pour être porté par un véhicule, un rotor porte-outils (3) logé de manière rotative dans le châssis avec son axe sensiblement parallèle à un terrain è traiter et perpendiculaire à la direction de déplacement du véhicule (100), un actionneur pour entraîner un arbre relié cinématiquement au rotor porte-outils (3) et un rotor de ventilateur (5) sensiblement orthogonal au rotor porte-outils (3), dans laquelle un canal (4) est situé entre le rotor porte-outils (3) et le rotor de ventilateur (5), et la surface de son ouverture d'admission est supérieure à la surface de son ouverture de sortie, **caractérisée en ce que** le bord supérieur (4b) du canal (4) est situé au niveau de 15 % à 21 % du diamètre extérieur du rotor de ventilateur (5) au-dessous du centre de rotation (5a) et le bord inférieur (4c) du canal (4) est situé au niveau de 30 % à 40 % du diamètre extérieur du rotor de ventilateur (5) au-dessous du centre de rotation (5a) et **en ce que** le rotor porte-outils est entraîné par un arbre de transmission qui s'étend à travers le rotor de ventilateur (5) et **en ce que** le rotor de ventilateur (5) et le rotor porte-outils (3) sont entraînés par le même arbre (22).

2. Machine pour hacher, récolter et transporter le matériau haché (1) selon la revendication 1, **caractérisé en ce que** le rotor porte-outils (3) est entraîné par deux rotors contrarotatifs (2).

3. Machine pour hacher, récolter et transporter le matériau haché (1) selon la revendication 1, **caractérisé en ce qu'**une boîte d'engrenages (21) est agencée entre l'arbre (22) et le rotor porte-outils.

4. Machine pour hacher, récolter et transporter le matériau haché (1) selon l'une des revendications précédentes, **caractérisée en ce que** la paroi supérieure et la paroi inférieure du canal (5) forment un angle (10) de 25° à 50°.

5. Machine pour hacher, récolter et transporter le matériau haché (1) selon l'une des revendications précédentes, **caractérisée en ce que** les pales (7) du rotor de ventilateur (5) possèdent des éléments tranchants et/ou des zones tranchantes.

6. Machine pour hacher, récolter et transporter le matériau haché (1) selon l'une des revendications précédentes, **caractérisée en ce que** les outils (3a) sur le rotor porte-outils sont oscillants.

7. Machine pour hacher, récolter et transporter le matériau haché (1) selon l'une des revendications précédentes, **caractérisée en ce que** le rotor porte-outils (3a) tourne dans le sens horaire si la machine (1) est placée à l'arrière du véhicule (100) et dans le sens antihoraire si la machine (1) est placée à l'avant du véhicule (100).

8. Machine pour hacher, récolter et transporter le matériau haché (1) selon l'une des revendications précédentes, **caractérisé en ce que** les parois latérales (7) du canal (4) convergent vers le rotor de ventilateur (5).
